(19) **Europäisches Patentamt / European Patent Office / Office européen des brevets**

(11) **EP 4 586 402 A1**

(12) **EUROPEAN PATENT APPLICATION**

(43) Date of publication:
16.07.2025 Bulletin 2025/29

(21) Application number: 25151457.6

(22) Date of filing: 13.01.2025

(51) International Patent Classification (IPC):
*H01Q 1/24* $^{(2006.01)}$     *H01Q 1/52* $^{(2006.01)}$
*H01Q 21/28* $^{(2006.01)}$     *H01Q 25/00* $^{(2006.01)}$
*H01Q 21/06* $^{(2006.01)}$

(52) Cooperative Patent Classification (CPC):
**H01Q 1/521; H01Q 1/246; H01Q 21/28;
H01Q 25/00;** H01Q 21/065

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: 15.01.2024 FI 20245031

(71) Applicant: **Nokia Solutions and Networks Oy
02610 Espoo (FI)**

(72) Inventors:
• **JELONNEK, Björn
Ulm (DE)**
• **SKOMRA, Lukasz
Udanin (PL)**
• **ESLAMI, Sheyda
Ulm (DE)**
• **DECHEN, Frank
Neu Ulm (DE)**
• **SBARRA, Elisa
Munich (DE)**
• **TUOMINEN, Mika Juhani
Halikko (FI)**

(74) Representative: **Nokia EPO representatives
Nokia Technologies Oy
Karakaari 7
02610 Espoo (FI)**

(54) **ANTENNA WITH REFLECTORS FOR MIMO RADIO UNITS**

(57) The present disclosure relates to an apparatus (200, 300, 400). The apparatus comprises: Two or more antenna panels (201, 301, 401, 501) with different boresight directions comprising a plurality of antenna elements (504a, 504b, 504c, 504d). At least one antenna panel within the two or more antenna panels is configured to reflect signals emitted by the two or more antenna panels. At least one processor and at least one memory including computer program code. The at least one memory and the computer program code are configured to, with the at least one processor, cause the apparatus at least to perform: Mitigating interference of beams corresponding to the two or more antenna panels.

FIG. 2

EP 4 586 402 A1

## Description

## TECHNICAL FIELD

Various example embodiments described herein relate to the field of wireless communications.

## BACKGROUND

Wireless communication systems are under constant development. Advanced antenna technologies, such as massive multiple-input multiple-output (mMIMO) antennas are used for meeting the requirements of 5G and beyond.

## SUMMARY

This summary is provided to introduce a selection of concepts in a simplified form that are further described below in the detailed description. This summary is not intended to identify key features or essential features of the claimed subject matter, nor is it intended to be used to limit the scope of the claimed subject matter.

Example embodiments of the present disclosure enable an antenna shaped to suppress grating lobes. This benefit may be achieved by the features of the independent claims. Further example embodiments are provided in the dependent claims, the detailed description, and the drawings.

According to a first aspect, an apparatus is disclosed. The apparatus may comprise: two or more antenna panels with different boresight directions comprising a plurality of antenna elements. At least one antenna panel within the two or more antenna panels may be configured to reflect signals emitted by the two or more antenna panels. At least one processor. At least one memory including computer program code. The at least one memory and the computer program code may be configured to, with the at least one processor, cause the apparatus at least to perform: Mitigating interference of beams corresponding to the two or more antenna panels.

Such an apparatus may benefit future generations of wireless networks.

According to an example embodiment of the first aspect, the two or more antenna panels may comprise two antenna panels arranged with an angle between them. Such an apparatus may enable the reflecting of the signals.

According to an example embodiment of the first aspect, the angle may be equal to an angle covered by a sector.

According to an example embodiment of the first aspect, the at least one antenna panel may comprise a metallic plate arranged at the back of the at least one antenna panel.

According to an example embodiment of the first aspect, the at least one antenna panel may comprise at least one of: a metallic grid, a metallic plate, and a reconfigurable intelligent surface, arranged as an extension of the at least one antenna panel. With such an apparatus, a size of a reflecting element may be increased. With such an apparatus comprising a metallic grid, a wind load may be kept limited.

According to an example embodiment of the first aspect, the at least one antenna panel may be further configured to attenuate the reflected signals.

According to an example embodiment of the first aspect, the at least one antenna panel may be further configured to scatter the reflected signals in a plurality of directions.

According to an example embodiment of the first aspect, the at least one antenna panel may be further configured to reduce side lobes and grating lobes within a radiation pattern of the two or more antenna panels.

According to an example embodiment of the first aspect, one or more antenna elements within the plurality of antenna elements may comprise an increased directivity.

According to an example embodiment of the first aspect, the plurality of antenna elements may be arranged with a space of more than half of a wavelength in a medium between the plurality of antenna elements. Such an apparatus may accommodate radiators with enhanced directivity.

According to an example embodiment of the first aspect, an antenna element within the plurality of antenna elements may comprise at least two radiators in vertical direction and/or at least two radiators in horizontal direction.

According to an example embodiment of the first aspect, the plurality of antenna elements may comprise cross-polarized antenna elements.

According to an example embodiment of the first aspect, the at least one memory and the computer program code may be configured to, with the at least one processor, cause the apparatus further to perform: Scaling beam magnitude corresponding to at least one antenna panel within the two or more antenna panels with a pre-defined scaling factor. With such an apparatus a higher efficiency and side lobe and/or grating lobe suppression may be achieved.

According to an example embodiment of the first aspect, the at least one memory and the computer program code may be configured to, with the at least processor, cause the apparatus further to perform: Selecting beam phases corresponding to the two or more antenna panels to achieve a coherent superposition in a beam direction. With such an apparatus, an increase of signal power may be achieved.

According to an example embodiment of the first aspect, the at least one memory and the computer program code may be configured to, with the at least processor, cause the apparatus further to perform at least one of: Switching off one or more antenna panels within the two or more antenna panels to reduce power consumption. Reducing beam power of one or more antenna panels within the two or more antenna panels to reduce power consumption. Switching off one or more antenna elements within the plurality of antenna elements to reduce power consumption. Arranging users in dedicated directions to reduce power consumption.

Any example embodiment may be combined with one or more other example embodiments. Many of the attendant features will be more readily appreciated as they become better understood by reference to the following detailed description considered in connection with the accompanying drawings.

## DESCRIPTION OF THE DRAWINGS

The accompanying drawings, which are included to provide a further understanding of the example embodiments and constitute a part of this specification, illustrate example embodiments and together with the description help to understand the example embodiments. In the drawings:

FIG. 1 illustrates an exemplified wireless communication system;
FIG. 2 illustrates a schematic block diagram of an apparatus according to an example embodiment;
FIG. 3 illustrates a schematic block diagram of an apparatus according to an example embodiment;
FIG. 4 illustrates a schematic block diagram of an apparatus according to an example embodiment;
FIG. 5 illustrates a schematic block diagram of an apparatus according to an example embodiment;
FIG. 6 illustrates example functionalities of an apparatus according to an example embodiment; and
FIG. 7 illustrates a schematic block diagram of an apparatus according to an example embodiment;

## DETAILED DESCRIPTION

Reference will now be made in detail to example embodiments, examples of which are illustrated in the accompanying drawings. The detailed description provided below in connection with the appended drawings is intended as a description of the present examples and is not intended to represent the only forms in which the present example may be constructed or utilized. The description sets forth the functions of the example and the sequence of steps for constructing and operating the example. However, the same or equivalent functions and sequences may be accomplished by different examples.

Although the specification may refer to "an", "one", or "some" embodiment(s) in several locations, this does not necessarily mean that each such reference is to the same embodiment(s), or that the feature may not apply to other embodiments. Single features of different embodiments may also be combined to provide other embodiments. Furthermore, words "comprising" and "including" should be understood as not limiting the described embodiments/examples to consist of only those features that have been mentioned and such embodiments/examples may contain also features/structures that have not been specifically mentioned.

Furthermore, although the numerative terminology, such as "first", "second", etc., may be used herein to describe various embodiments, elements, or features, it should be understood that these embodiments, elements, or features should not be limited by this numerative terminology. This numerative terminology is used herein only to distinguish one embodiment, element, or feature from another embodiment, element, or feature. For example, a first panel discussed below could be called a second panel, and vice versa, without departing from the teachings of the present disclosure.

In the following, different exemplifying embodiments will be described using, as an example of an access architecture to which the embodiments may be applied, a radio access architecture based on long term evolution advanced (LTE Advanced, LTE-A) or new radio (NR, 5G), without restricting the embodiments to such an architecture, however. The embodiments may also be applied to other kinds of communications networks having suitable means by adjusting parameters and procedures appropriately. Some examples of other options for suitable systems are the universal mobile telecommunications system (UMTS) radio access network (UTRAN or E-UTRAN), long term evolution (LTE, the same as E-UTRA), wireless local area network (WiAN or WiFi), worldwide interoperability for microwave access (Wi-MAX), Bluetooth®, personal communications services (PCS), ZigBee®, wideband code division multiple access (WCDMA), systems using ultra-wideband (UWB) technology, sensor networks, mobile ad-hoc networks (MANETs) and Internet Protocol multimedia subsystems (IMS) or any combination thereof.

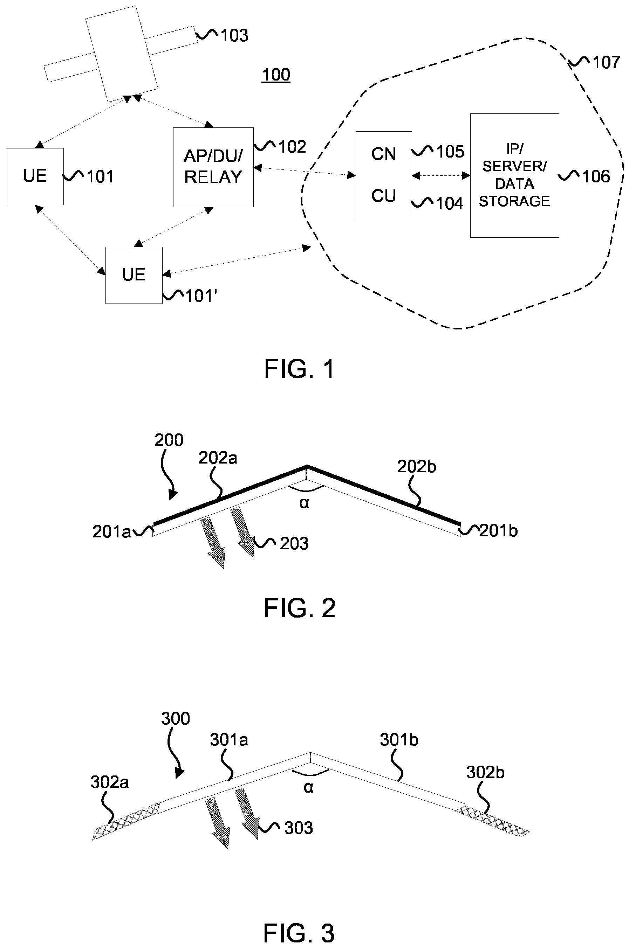

FIG. 1 depicts examples of simplified system architectures only showing some elements and functional entities, all being logical units, whose implementation may differ from what is shown. The connections shown in FIG. 1 are logical connections; the actual physical connections may be different. It is apparent to a person skilled in the art that the system typically comprises also other functions and structures than those shown in FIG. 1.

The embodiments are not, however, restricted to the system given as an example but a person skilled in the art may apply the solution to other communication systems provided with necessary properties.

The example of FIG. 1 shows a part of an exemplifying radio access network 100.

FIG. 1 shows user devices 101, 101' configured to be in a wireless connection on one or more communication channels with a node 102. The node 102 is further connected to a core network 105. In one example, the node 102 may be an access node such as (e/g) NodeB providing or serving devices in a cell. In one example, the node 102 may be a non-3GPP access node. The physical link from a device to a (e/g)NodeB is called uplink or reverse link and the physical link from the (e/g)NodeB to the device is called downlink or forward link. It should be appreciated that (e/g)NodeBs or their functionalities may be implemented by using any node, host, server or access point etc. entity suitable for such a usage.

A communications system typically comprises more than one (e/g)NodeB in which case the (e/g)NodeBs may also be configured to communicate with one another over links, wired or wireless, designed for the purpose. These links may be used for signaling purposes. The (e/g)NodeB is a computing device configured to control the radio resources of communication system it is coupled to. The NodeB may also be referred to as a base station, an access point or any other type of interfacing device including a relay station capable of operating in a wireless environment. The (e/g)NodeB includes or is coupled to transceivers. From the transceivers of the (e/g)NodeB, a connection is provided to an antenna unit that establishes bi-directional radio links to devices. The antenna unit may comprise a plurality of antennas or antenna elements. The (e/g)NodeB is further connected to the core network 105 (CN or next generation core NGC). Depending on the system, the counterpart on the CN side can be a serving gateway (S-GW, routing and forwarding user data packets), packet data network gateway (P-GW), for providing connectivity of user devices (UEs) to external packet data networks, or mobile management entity (MME), or access and mobility management function (AMF), etc.

The user device (also called UE, user equipment, user terminal, terminal device, etc.) illustrates one type of an apparatus to which resources on the air interface are allocated and assigned, and thus any feature described herein with a user device may be implemented with a corresponding apparatus, such as a relay node. An example of such a relay node is a layer 3 relay (self-backhauling relay) towards the base station.

The user device typically refers to a device (e.g. a portable or non-portable computing device) that includes wireless mobile communication devices operating with or without a subscriber identification module (SIM), including, but not limited to, the following types of devices: a mobile station (mobile phone), smartphone, personal digital assistant (PDA), handset, device using a wireless modem (alarm or measurement device, etc.), laptop and/or touch screen computer, tablet, game console, notebook, and multimedia device. It should be appreciated that a device may also be a nearly exclusive uplink only device, of which an example is a camera or video camera loading images or video clips to a network. A device may also be a device having capability to operate in Internet of Things (IoT) network which is a scenario in which objects are provided with the ability to transfer data over a network without requiring human-to-human or human-to-computer interaction, e.g., to be used in smart power grids and connected vehicles.

The user device may also utilize cloud. In some applications, a user device may comprise a user portable device with radio parts (such as a watch, earphones, eyeglasses, other wearable accessories or wearables) and the computation is carried out in the cloud. The device (or in some embodiments a layer 3 relay node) is configured to perform one or more of user equipment functionalities. The user device may also be called a subscriber unit, mobile station, remote terminal, access terminal, user terminal or user equipment (UE) just to mention but a few names or apparatuses.

Various techniques described herein may also be applied to a cyber-physical system (CPS) (a system of collaborating computational elements controlling physical entities). CPS may enable the implementation and exploitation of massive amounts of interconnected ICT devices (sensors, actuators, processors microcontrollers, etc.) embedded in physical objects at different locations. Mobile cyber physical systems, in which the physical system in question has inherent mobility, are a subcategory of cyber-physical systems. Examples of mobile physical systems include mobile robotics and electronics transported by humans or animals.

Additionally, although the apparatuses have been depicted as single entities, different units, processors and/or memory units (not all shown in FIG. 1) may be implemented.

5G enables using multiple-input multiple-output (MIMO) antennas, many more base stations or nodes than the LTE (a so-called small cell concept), including macro sites operating in co-operation with smaller stations and employing a variety of radio technologies depending on service needs, use cases and/or spectrum available. 5G mobile communications supports a wide range of use cases and related applications including video streaming, augmented reality, different ways of data sharing and various forms of machine type applications (such as (massive) machine-type communications (mMTC), including vehicular safety, different sensors and real-time control. 5G is expected to have multiple radio interfaces, namely below 6 GHz, cmWave and mmWave, and also being integrable with existing legacy radio access technologies, such as the LTE. Integration with the LTE may be implemented, at least in the early phase, as a system, where macro coverage is provided by the LTE and 5G radio interface access comes from small cells by aggregation to the LTE. In other words, 5G is planned to support both inter-RAT operability (such as LTE-5G) and inter-RI operability (inter-radio interface operability, such as below 6 GHz-cmWave, below 6 GHz-cmWave-mmWave). One of the concepts considered to be used in 5G networks is network slicing in which multiple independent and dedicated virtual sub-networks (network instances) may be created within the same infrastructure to run services that have different requirements on latency, reliability, throughput, and mobility.

The current architecture in LTE networks is fully distributed in the radio and fully centralized in the core network. The low latency applications and services in 5G require to bring the content close to the radio which leads to local break out and multi-access edge computing (MEC). 5G enables analytics and knowledge generation to occur at the source of the data. This approach requires leveraging resources that may not be continuously connected to a network such as laptops, smartphones, tablets, and sensors. MEC provides a distributed computing environment for application and service hosting. It also has the ability to store and process content in close proximity to cellular subscribers for faster response time. Edge computing covers a wide range of technologies such as wireless sensor networks, mobile data acquisition, mobile signature analysis, cooperative distributed peer-to-peer ad hoc networking and processing also classifiable as local cloud/fog computing and grid/mesh computing, dew computing, mobile edge computing, cloudlet, distributed data storage and retrieval, autonomic self-healing networks, remote cloud services, augmented and virtual reality, data caching, Internet of Things (massive connectivity and/or latency critical), critical communications (autonomous vehicles, traffic safety, real-time analytics, time-critical control, healthcare applications).

The communication system is also able to communicate with other networks, such as a public switched telephone network or the Internet 106, or utilize services provided by them. The communication network may also be able to support the usage of cloud services, for example at least part of core network operations may be carried out as a cloud service (this is depicted in FIG. 1 by "cloud" 107). The communication system may also comprise a central control entity, or a like, providing facilities for networks of different operators to cooperate for example in spectrum sharing.

The technology of Edge cloud may be brought into a radio access network (RAN) by utilizing network function virtualization (NVF) and software defined networking (SDN). Using the technology of edge cloud may mean access node operations to be carried out, at least partly, in a server, host or node operationally coupled to a remote radio head or base station comprising radio parts. It is also possible that node operations will be distributed among a plurality of servers, nodes, or hosts. Application of cloud RAN architecture enables RAN real time functions being carried out at the RAN side (in a distributed unit, DU 102) and non-real time functions being carried out in a centralized manner (in a centralized unit, CU 104).

It should also be understood that the distribution of labor between core network operations and base station operations may differ from that of the LTE or even be non-existent. Some other technology advancements probably to be used are Big Data and all-IP, which may change the way networks are being constructed and managed. 5G (or new radio, NR) networks are being designed to support multiple hierarchies, where MEC servers can be placed between the core and the base station or nodeB (gNB). It should be appreciated that MEC can be applied in 4G networks as well.

5G may also utilize satellite communication to enhance or complement the coverage of 5G service, for example by providing backhauling. Possible use cases are providing service continuity for machine-to-machine (M2M) or Internet of Things (IoT) devices or for passengers on board of vehicles, or ensuring service availability for critical communications, and future railway/maritime/aeronautical communications. Satellite communication may utilize geostationary earth orbit (GEO) satellite systems, but also low earth orbit (LEO) satellite systems, in particular mega-constellations (systems in which hundreds of (nano)satellites are deployed). Each satellite 103 in the mega-constellation may cover several satellite-enabled network entities that create on-ground cells. The on-ground cells may be created through an on-ground relay node 102 or by a gNB located on-ground or in a satellite.

It is obvious for a person skilled in the art that the depicted system is only an example of a part of a radio access system and in practice, the system may comprise a plurality of (e/g)NodeBs, the user device may have an access to a plurality of radio cells and the system may comprise also other apparatuses, such as physical layer relay nodes or other network elements, etc. At least one of the (e/g)NodeBs or may be a Home(e/g)NodeB. Additionally, in a geographical area of a radio communication system a plurality of different kinds of radio cells as well as a plurality of radio cells may be provided. Radio cells may be macro cells (or umbrella cells) which are large cells, usually having a diameter of up to tens of kilometers, or smaller cells such as micro-, femto- or picocells. The (e/g)NodeBs of FIG. 1 may provide any kind of these cells. A cellular radio system may be implemented as a multilayer network including several kinds of cells. Typically, in multilayer networks, one access node provides one kind of a cell or cells, and thus a plurality of (e/g)NodeBs are required to provide such a network structure.

For fulfilling the need for improving the deployment and performance of communication systems, the concept of "plug-and-play" (e/g)NodeBs has been introduced. Typically, a network which is able to use "plug-and-play" (e/g)NodeBs, includes, in addition to Home (e/g)NodeBs (H(e/g)NodeBs), a home node B gateway, or HNB-GW (not shown in FIG. 1). A HNB Gateway (HNB-GW), which is typically installed within an operator's network may aggregate traffic from a large number of HNBs back to a core network.

In 5G and beyond, it is envisaged that critical design parameters for antennas are gain and directivity. An antenna apparatus configured to employ a beneficial antenna element spacing while mitigating grating lobes would benefit future generations of wireless networks. A grating lobe may be understood as a lobe other than a main lobe, produced by an array antenna wherein inter-element spacing is sufficiently large, e.g., more than half of a wavelength λ in a medium between a plurality of antenna elements, to permit in-phase addition of radiated fields in more than one direction. A lobe may be understood as a local maximum in a radiation pattern of the array antenna. The main lobe may be understood as a region in the radiation pattern comprising highest power or exhibiting greatest field strength. The antenna apparatus may comprise an antenna panel configured to reflect signals (beams), e.g., as described below with FIG. 2 to 6.

FIG. 2 illustrates a schematic block diagram of a cross-sectional view of an apparatus 200 according to an example embodiment.

Referring to FIG. 2, the apparatus 200 comprises two or more antenna panels 201a, 201b with different boresights. The two or more antenna panels comprise a plurality of antenna elements (not shown in FIG. 2). At least one antenna panels within the two or more antenna panels 201a, 201b is configured to reflect signals 203 emitted by the two or more antenna panels 201a, 201b. In an example embodiment, the signal reflecting is enabled by a reflector comprised in the at least antenna panel. In an example embodiment, the two or more antenna panels 201a, 201b are arranged with an angle α between them. In an example embodiment, the angle α may be equal to an angle covered by a sector. In an example embodiment, the angle α may be at least 120° and at most 140°. The angle α of at least 120° and at most 140° may be the most advantageous angle in an example embodiment of a 3-sector configuration.

Referring to FIG. 2, the at least one antenna panel within the two or more antenna panels 201a, 201b comprises a metallic plate 202a, 202b arranged at the back of the at least one antenna panel. The metallic plate 202a, 202b facilitates the at least one antenna panel being configured to reflect the signals 203. The metallic plate 202a, 202b reflecting the signals may enable confining potential grating lobes within a coverage area of the apparatus 200.

FIG. 3 illustrates a schematic block diagram of a cross-sectional view of an apparatus 300 according to an example embodiment.

Referring to FIG. 3, the apparatus 300 comprises two or more antenna panels 301a, 301b with different boresights. The two or more antenna panels comprise a plurality of antenna elements (not shown in FIG. 2). At least one antenna panels within the two or more antenna panels 301a, 301b is configured to reflect signals 303 emitted by the two or more antenna panels 301a, 301b. In an example embodiment, the two or more antenna panels 301a, 301b are arranged with an angle α between them.

Referring to FIG. 3, the at least one antenna panel within the two or more antenna panels 301a, 301b comprises an element 302a, 302b arranged as an extension of the at least one antenna panel. In an example embodiment, the element 302a, 302b may be a metallic grid. In an example embodiment, the element 302a, 302b may be a metallic plate. In an example embodiment, the element 302a, 302b may be a reconfigurable intelligent surface (RIS). The RIS may be understood as a programmable surface structure that may be used to control reflection of electromagnetic waves by changing electric and magnetic properties of the surface. In an example embodiment, the element 302a, 302b may create a diffuse reflection. The element 302a, 302b reflecting the signals may enable confining potential grating lobes within a coverage area of the apparatus 300.

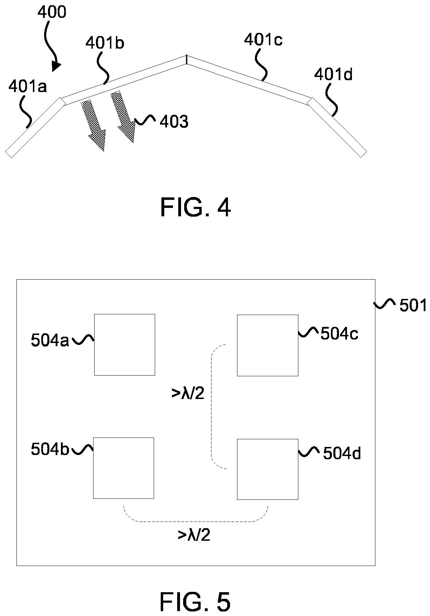

FIG. 4 illustrates a schematic block diagram of a cross-sectional view of an apparatus 400 according to an example embodiment.

Referring to FIG. 4, the apparatus 400 comprises at least three antenna panels 401a, 401b, 401c, 401d with different boresights. At least one antenna panels within the at least three antenna panels 401a, 401b, 401c, 401d is configured to reflect signals 403 emitted by the at least three antenna panels 401a, 401b, 401c, 401d. This is facilitated by one or more metallic plates (not shown in FIG. 4) arranged at the back of the at least one antenna panel.

In an example embodiment of the apparatus 200, 300, or 400, the at least one antenna panel may be configured to redirect the signals in a distinct direction.

In an example embodiment of the apparatus 200, 300, or 400, the at least one antenna panel may be configured to create a diffuse reflection by scattering the reflected signals in a plurality of directions. This may be enabled by a non-flat surface of the reflector.

In an example embodiment of the apparatus 200, 300, or 400, the at least one antenna panel may be configured to attenuate the reflected signals. This may be enabled by the reflector being made of an electromagnetic absorber material that attenuates incoming waves. Electromagnetic absorbers may be understood as, e.g., dielectrics combined with metal plates spaced at prescribed intervals or wavelengths. Alternatively, or additionally, this may be enabled by the at least one antenna panel acting as a receiver.

In an example embodiment of the apparatus 200, 300, or 400, the at least one antenna panel may be configured to reduce side lobes and grating lobes within a radiation pattern of the two or more antenna panels 201a, 201b, 301a, 301b, 401a, 401b, 401c, 401d.

FIG. 5 illustrates a schematic block diagram of an antenna panel 501 according to an example embodiment.

Referring to FIG. 5, the antenna panel 501 comprises a plurality of antenna elements 504a, 504b, 504c, 504d. In an example embodiment, the plurality of antenna elements is arranged with a space of more half of a wavelength λ in a medium between the plurality of antenna elements. In an example embodiment, an antenna element within the plurality of antenna elements 504a, 504b, 504c, 504d may comprise one radiator. In an example embodiment, an antenna element within the plurality of antenna elements 504a, 504b, 504c, 504d may comprise at least two radiators in vertical direction and/or at least two radiators in horizontal direction. In an example embodiment, the plurality of antenna elements 504a, 504b, 504c, 504d may be cross-polarized antenna elements.

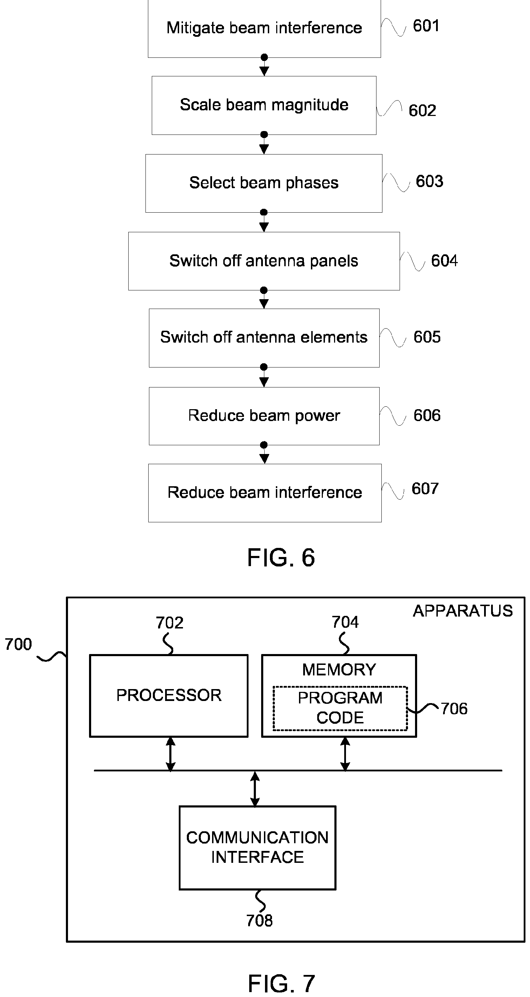

FIG. 6 illustrates example functionalities of an apparatus configured to reflect signals.

Referring to FIG. 6, interference of beams (signals) corresponding to the two or more antenna panels is mitigated in operation 601. In an example embodiment, the mitigation may be performed by a dedicated scheduler algorithm. In an example embodiment, the mitigation may be performed by a precoding algorithm, such as, e.g., a zero-forcing algorithm. In an example embodiment, users may be scheduled or pre-scheduled to mitigate the interference. In an example embodiment, users may be (pre-)scheduled to collect them in dedicated directions. Beam magnitude corresponding to the two or more antenna panels is scaled in operation 602 with a pre-defined scaling factor. In an example embodiment, the two or more antenna panels comprise a first antenna panel and a second antenna panel. The scaling factor for the first antenna panel may be pre-defined as an absolute value of a ratio between a gain of the first antenna panel and a gain of the second antenna panel, if the gain of the first antenna panel is smaller than the gain of the second antenna panel, and one, if the gain of the first antenna panel is greater than or equal to the gain of the second antenna panel. The scaling factor for the second antenna panel may be pre-defined as an absolute value of a ratio between a gain of the second antenna panel and a gain of the first antenna panel, if the gain of the second antenna panel is smaller than the gain of the first antenna panel, and one, if the gain of the second antenna panel is greater than or equal to the gain of the first antenna panel. This determining the scaling factors may be expressed by the following equations:

$$\text{scale}_1 = \begin{cases} 1, & \text{if } \text{gain}_1 \geq \text{gain}_2 \\ \text{abs}\left(\dfrac{\text{gain}_1}{\text{gain}_2}\right), & \text{if } \text{gain}_1 < \text{gain}_2 \end{cases}'$$

$$\text{scale}_2 = \begin{cases} 1, & \text{if } \text{gain}_2 \geq \text{gain}_1 \\ \text{abs}\left(\dfrac{\text{gain}_2}{\text{gain}_1}\right), & \text{if } \text{gain}_2 < \text{gain}_1 \end{cases}'$$

wherein $\text{scale}_1$ may be understood as the pre-defined scaling factor for the first antenna panel, $\text{scale}_2$ may be understood as the pre-defined scaling factor for the second antenna panel, $\text{gain}_1$ may be understood as the gain of the first antenna panel, and $\text{gain}_2$ may be understood as the gain of the second antenna panel.

Referring to FIG. 6, beam phases corresponding to the two or more antenna panels are selected in operation 603 to achieve coherent superposition in beam direction. One or more antenna panels within the two or more antenna panels may be switched off in operation 604 to reduce power consumption. Additionally, or alternatively, one or more antenna elements within the plurality of antenna elements may be switched off in operation 605 to reduce power consumption. Beam power (transmission power) of one or more antenna panels within the two or more antenna panels may be reduced in operation 606 to reduce power consumption. Beam interference is reduced in operation 607 by a pre-coding algorithm. In an example embodiment, the pre-coding algorithm may be a zero-forcing algorithm.

The blocks and related functions described above by means of FIG. 2 to 6 are in no absolute chronological order, and some of them may be performed simultaneously or in an order differing from the given one. Other functions can also be executed between them or within them, and/or other rules applied or selected. Some of the blocks or part of the blocks or one or more pieces of information can also be left out or replaced by a corresponding block or part of the block or one or more pieces of information.

FIG. 7 illustrates an example embodiment of an apparatus 700 configured to practice one or more example embodiments. The apparatus 700 may comprise, e.g., a base station, a gNB, a terminal apparatus, a user node, a user equipment, a cloud node, or in general a device configured to implement the functionality described herein. Although the apparatus 700 is illustrated as a single device, it is appreciated that, wherever applicable, functions of the apparatus 700 may be distributed to a plurality of devices.

The apparatus 700 may comprise at least one processor 702. The at least one processor 702 may comprise, for example, one or more of various processing devices or processor circuitry, such as for example a co-processor, a microprocessor, a controller, a digital signal processor (DSP), a processing circuitry with or without an accompanying DSP, or various other processing devices including integrated circuits such as, for example, an application specific integrated circuit (ASIC), a field programmable gate array (FPGA), a microcontroller unit (MCU), a hardware accelerator, a special-purpose computer chip, or the like.

The apparatus 700 may further comprise at least one memory 704. The at least one memory 704 may be configured to store, for example, computer program code or the like, for example operating system software and application software. The at least one memory 704 may comprise one or more volatile memory devices, one or more non-volatile memory devices, and/or a combination thereof. For example, the at least one memory 704 may be embodied as magnetic storage devices (such as hard disk drives, floppy disks, magnetic tapes, etc.), optical magnetic storage devices, or semiconductor memories (such as mask ROM, PROM (programmable ROM), EPROM (erasable PROM), flash ROM, RAM (random access memory), etc.).

The apparatus 700 may further comprise a communication interface 708 configured to enable the apparatus 700 to transmit and/or receive information to/from other devices. In one example, the apparatus 700 may use the communication interface 708 to transmit or receive signaling information and data in accordance with at least one data communication or cellular communication protocol. The communication interface 708 may be configured to provide at least one wireless radio connection, such as, for example, a 3GPP mobile broadband connection (e.g., 3G, 4G, 5G, 6G etc.). The communication interface 708 may comprise, or be configured to be coupled to, at least one antenna to transmit and/or receive radio frequency signals. One or more of the various types of connections may be also implemented as separate communication interfaces, which may be coupled or configured to be coupled to one or more of a plurality of antennas. The communication interface X08 may comprise a receiver, a transmitter, or a transceiver.

When the apparatus 700 is configured to implement some functionality, some component and/or components of the apparatus 700, such as for example the at least one processor 702 and/or the at least one memory 704, may be configured to implement this functionality. Furthermore, when the at least one processor 702 is configured to implement some functionality, this functionality may be implemented using program code 706 comprised, for example, in the at least one memory 704.

The functionality described herein may be performed, at least in part, by one or more computer program product components such as for example software components. According to an example embodiment, the apparatus 700 may comprise a processor or processor circuitry, such as for example a microcontroller, configured by the program code when executed to execute the embodiments of the operations and functionality described. The program code 706 is provided as an example of instructions which, when executed by the at least one processor 702, cause performance of apparatus. Alternatively, or additionally, the functionality described herein can be performed, at least in part, by one or more hardware logic components. For example, and without limitation, illustrative types of hardware logic components that can be used include Field-programmable Gate Arrays (FPGAs), application-specific Integrated Circuits (ASICs), application-specific Standard Products (ASSPs), System-on-α-chip systems (SOCs), Complex Programmable Logic Devices (CPLDs), Graphics Processing Units (GPUs).

The apparatus 700 may be configured to perform or cause performance of any aspect of the method(s) described herein. Further, a computer program may comprise instructions for causing, when executed, an apparatus to perform any aspect of the method(s) described herein. The computer program may be stored on a computer-readable medium. Further, the apparatus 700 may comprise means for performing any aspect of the method(s) described herein. In one example, the means may comprise the at least one processor 702, the at least one memory 704 including the program code 706 (instructions) configured to, when executed by the at least one processor 702, cause the apparatus 700 to perform the method(s). In general, computer program instructions may be executed on means providing generic processing functions. The method(s) may be thus computer-implemented, for example, algorithm(s) executable by the generic processing functions, an example of which is the at least one processor 702. The means may comprise transmission and/or reception means, for example one or more radio transmitters or receivers, which may be coupled or be configured to be coupled to one or more antennas, or transmitter(s) or receiver(s) of a wired communication interface.

As used in this application, the term 'circuitry' refers to all of the following: (a) hardware-only circuit implementations, such as implementations in only analog and/or digital circuitry, and (b) combinations of circuits and soft-ware (and/or firmware), such as (as applicable): (i) a combination of processor(s) or (ii) portions of processor(s)/software including digital signal processor(s), software, and memory(ies) that work together to cause an apparatus to perform various functions, and ($\tau$) circuits, such as a microprocessor(s) or a portion of a microprocessor(s), that require software or firmware for operation, even if the software or firmware is not physically present. This definition of 'circuitry' applies to all uses of this term in this application. As a further example, as used in this application, the term 'circuitry' would also cover an implementation of merely a processor (or multiple processors) or a portion of a processor and its (or their) accompanying software and/or firmware. The term 'circuitry' would also cover, for example and if applicable to the particular element, a baseband integrated circuit or applications processor integrated circuit for a mobile device or a similar integrated circuit in a sensor, a cellular network device, or another network device.

Although the subject matter has been described in language specific to structural features and/or acts, it is to be understood that the subject matter defined in the appended claims is not necessarily limited to the specific features or acts described above. Rather, the specific features and acts described above are disclosed as example embodiments of implementing the claims and other equivalent features and acts are intended to be within the scope of the claims.

It will be understood that the benefits and advantages described above may relate to one example embodiment or may relate to several example embodiments. The example embodiments are not limited to those that solve any or all of the stated problems or those that have any or all of the stated benefits and advantages. It will further be understood that reference to 'an' item may refer to one or more of those items.

The steps or operations of the methods described herein may be carried out in any suitable order, or simultaneously where appropriate. Additionally, individual blocks may be deleted from any of the methods without departing from the scope of the subject matter described herein. Aspects of any of the example embodiments described above may be combined with aspects of any of the other example embodiments described to form further example embodiments without losing the effect sought.

It will be understood that the above description is given by way of example embodiments only and that various modifications may be made by those skilled in the art. The above specification, example embodiments and data provide a complete description of the structure and use of exemplary embodiments. Although various example embodiments have been described above with a certain degree of particularity, or with reference to one or more individual embodiments, those skilled in the art could make numerous alterations to the disclosed example embodiments without departing from scope of this specification.

**Claims**

1. An apparatus (200, 300, 400) comprising:

   two or more antenna panels (201, 301, 401, 501) with different boresight directions comprising a plurality of antenna elements (504a, 504b, 504c, 504d), at least one antenna panel within the two or more antenna panels (201, 301, 401, 501) configured to reflect signals emitted by the two or more antenna panels (201, 301, 401, 501), wherein an antenna element within the plurality of antenna elements (504a, 504b, 504c, 504d) comprises at least two radiators in a vertical direction and at least two radiators in a horizontal direction,
   wherein the plurality of antenna elements (504a, 504b, 504c, 504d) are arranged with a space of more than half of a wavelength in a medium between the plurality of antenna elements (504a, 504b, 504c, 504d);
   at least one processor; and
   at least one memory;
   storing instructions that, when executed by the at least one processor, cause the apparatus at least to perform:
   mitigating interference of beams corresponding to the two or more antenna panels (201, 301, 401, 501).

2. An apparatus according to claim 1, wherein the two or more antenna panels comprise two antenna panels arranged with an angle between them.

3. An apparatus according to claim 2, wherein the angle is equal to an angle covered by a sector.

4. An apparatus according to any of claims 1 to 3, wherein the at least one antenna panel comprises a metallic plate arranged at the back of the at least one antenna panel.

5. An apparatus according to any of claims 1 to 3, wherein the apparatus further comprises an element (302), the element (302) comprising at least one of: a metallic grid, a metallic plate, and a reconfigurable intelligent surface, arranged as an extension of the at least one antenna panel.

6. An apparatus according to any of the preceding claims, wherein the at least one antenna panel is further configured to attenuate the reflected signals.

7. An apparatus according to any of the preceding claims, wherein the at least one antenna panel is further configured to scatter the reflected signals in a plurality of directions.

8. An apparatus according to any of the preceding claims, wherein the apparatus comprises at least three antenna panels with different boresights.

9. An apparatus according to any of the preceding claims, wherein the at least one antenna panel is configured to redirect the signals in a distinct direction.

10. An apparatus according to any of the preceding claims, wherein the plurality of antenna elements comprises cross-polarized antenna elements.

11. An apparatus according to any of the preceding claims, wherein the at least one memory and the instructions are configured to, with the at least one processor, cause the apparatus further to perform: scaling beam magnitude corresponding to at least one antenna panel within the two or more antenna panels with one or more pre-defined scaling factors.

12. An apparatus according to any of the preceding claims, wherein the at least one memory and the instructions are configured to, with the at least one processor, cause the apparatus further to perform: selecting beam phases corresponding to the two or more antenna panels to achieve a coherent superposition in a beam direction.

13. An apparatus according to any of the preceding claims, wherein the at least one memory and the instructions are configured to, with the at least one processor, cause the apparatus further to perform at least one of:

    switching off one or more antenna panels within the two or more antenna panels to reduce power consumption;

reducing beam power of one or more antenna panels within the two or more antenna panels to reduce power consumption;

switching off one or more antenna elements within the plurality of antenna elements to reduce power consumption; and

arranging users in dedicated directions to reduce power consumption.

14. An apparatus according to any of the preceding claims, wherein the at least one memory and the instructions are configured to, with the at least one processor, cause the apparatus further to perform: wherein the mitigating interference of beams corresponding to the two or more antenna panels is performed by a precoding algorithm such that users are scheduled or pre-scheduled to mitigate the interference.

15. An apparatus according to any of the preceding claims, wherein the apparatus comprises at least one of: a base station, a gNB, a terminal apparatus, a user node, a user equipment, or a cloud node.

FIG. 1

FIG. 2

FIG. 3

FIG. 4

FIG. 5

Mitigate beam interference ⌇ 601

↓

Scale beam magnitude ⌇ 602

↓

Select beam phases ⌇ 603

↓

Switch off antenna panels ⌇ 604

↓

Switch off antenna elements ⌇ 605

↓

Reduce beam power ⌇ 606

↓

Reduce beam interference ⌇ 607

## FIG. 6

700 ⌇

APPARATUS

702

PROCESSOR

704

MEMORY

PROGRAM CODE ⌇ 706

COMMUNICATION INTERFACE

708

## FIG. 7

Europäisches
Patentamt

European
Patent Office

Office européen
des brevets

# EUROPEAN SEARCH REPORT

**Application Number**

EP 25 15 1457

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 11 019 506 B2 (COMMSCOPE TECHNOLOGIES LLC [US]) 25 May 2021 (2021-05-25) | 1-5, 8-13,15 | INV. H01Q1/24 |
| A | * abstract; figures 3, 8, 9 *<br>* column 12, line 33 - column 14, line 49 *<br>* column 18, line 22 - column 25, line 48 * | 6,7,14 | H01Q1/52<br>H01Q21/28<br>H01Q25/00<br><br>ADD.<br>H01Q21/06 |
| | - - - - - | | |
| A | US 2009/312057 A1 (MOON YOUNG-CHAN [KR] ET AL) 17 December 2009 (2009-12-17)<br>* abstract; figures 6-7 *<br>* paragraphs [0044] - [0049] * | 1-15 | |
| | - - - - - | | |

**TECHNICAL FIELDS SEARCHED (IPC)**

H01Q

The present search report has been drawn up for all claims

| Place of search | Date of completion of the search | Examiner |
|---|---|---|
| The Hague | 9 May 2025 | Hüschelrath, Jens |

EPO FORM 1503 03.82 (P04C01)

## ANNEX TO THE EUROPEAN SEARCH REPORT
## ON EUROPEAN PATENT APPLICATION NO.

EP 25 15 1457

This annex lists the patent family members relating to the patent documents cited in the above-mentioned European search report.
The members are as contained in the European Patent Office EDP file on
The European Patent Office is in no way liable for these particulars which are merely given for the purpose of information.

09-05-2025

| Patent document cited in search report | | Publication date | Patent family member(s) | | Publication date |
|---|---|---|---|---|---|
| US 11019506 | B2 | 25-05-2021 | CN | 112437998 A | 02-03-2021 |
| | | | EP | 3991250 A1 | 04-05-2022 |
| | | | US | 2021029556 A1 | 28-01-2021 |
| | | | US | 2021250780 A1 | 12-08-2021 |
| | | | US | 2023164588 A1 | 25-05-2023 |
| | | | WO | 2020258029 A1 | 30-12-2020 |
| US 2009312057 | A1 | 17-12-2009 | CN | 102084546 A | 01-06-2011 |
| | | | EP | 2308133 A2 | 13-04-2011 |
| | | | JP | 2011524681 A | 01-09-2011 |
| | | | KR | 20090130812 A | 24-12-2009 |
| | | | KR | 20120006963 A | 19-01-2012 |
| | | | US | 2009312057 A1 | 17-12-2009 |
| | | | WO | 2010005178 A2 | 14-01-2010 |

EPO FORM P0459

For more details about this annex : see Official Journal of the European Patent Office, No. 12/82